# EUROPEAN PATENT APPLICATION

(11) **EP 2 073 552 A1**
(43) Date of publication of application: **24.06.2009**
(21) Application number: 07150380.9
(22) Date of filing: 21.12.2007
(51) Int. Cl.: H04N 7/24

(54) **Method and arrangement for controlling a media consumption rate of a receiver**

(71) Applicant: Telefonaktiebolaget LM Ericsson (publ), 16483 Stockholm (SE)
(72) Inventor: Strandmark, Björn, SE-241 93, ESLÖV (SE); Nordfeldt, Pontus, SE-268 90, SVALÖV (SE)
(74) Representative: Andersson, Björn E.

(57) **Abstract**

A method for controlling a media consumption rate of a receiver is disclosed. The method comprises collecting a plurality of trend samples indicative of a trend of a level of a buffer of the receiver wherein each of the trend samples is based on a difference between a first buffer level and a second buffer level, wherein the first buffer level is the level of the buffer at a first moment in time and the second buffer level is the level of the buffer at a second moment in time, determining a trend estimate by forming a mean value of the trend samples, evaluating an accuracy of the trend estimate, and adjusting the media consumption rate based on at least the trend estimate and the evaluated accuracy. Corresponding arrangement and computer program product are also disclosed.

## Description

### Technical Field

The present invention relates generally to the field of inter-system media synchronization. More particularly, it relates to control of a media consumption rate of a receiving media system.

### Background

Real-time playback of media content distributed from a media server is an essential feature for many media system applications. For example, playback of network-distributed media content in real-time is implemented in many mobile terminals and becomes increasingly important. Applications such as playback of streaming media content stored on a network server, and mobile TV where a server broadcasts media content to many mobile terminals simultaneously are examples where playback of network-distributed media content in real-time is utilized.

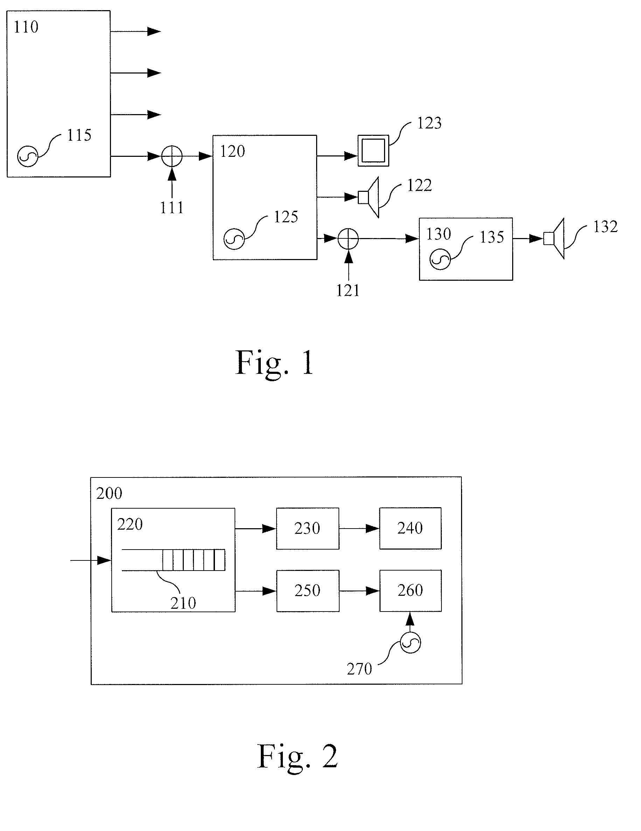

Figure 1 illustrates example connected media systems. Generally speaking, the media server 110 may be viewed as a general media system that is adapted to transmit, e.g. by unicast or multicast, media content to other media systems 120, such as a mobile terminal. Similarly, the other media system 120 may be viewed as a media system that is adapted to receive media content and present it through one or more media-presenting devices, such as a loudspeaker 122 and a display 123. Alternatively or additionally, the other media system 120 may be adapted to forward the media content to yet another media system 130, as illustrated in Figure 1, for presentation at one or more media-presenting devices, such as a loudspeaker 132. An example of the latter may be when the other media system 120 is a mobile terminal and the mobile terminal forwards media content to a wireless headset.

The transmission of media content may also be subject to disturbances and/or noise as indicated at 111 and 121.

Each media system typically has a clock 115, 125, 135 that defines the rate of that media system. The rates may typically differ between media systems, e.g. due to differences in the oscillators and devices generating the clock signals. Oscillators, for example, are subject to production-, age- and temperature-variances. All these variances taken together may typically be in the range ±[20...100] ppm. Clock generator devices, such as for instance a phase locked loop (PLL), may introduce a constant frequency error when generating an output frequency from an input frequency, which may differ from the output frequency, due to truncation effects in division. Such errors can be even more significant, up to ±1 ‰.

When executing the real-time playback, media content may be pushed from the media server 110 to a receiving media system 120, such as a mobile terminal. The media content may be pushed at a rate defined by the media content and by a clock frequency of the server clock 115. Simultaneously, the media content may be pulled from the receiver at the receiving media system 120 by one or more media-presenting devices, such as a loudspeaker 122 and a display 123. The media content may be pulled at a rate defined by the media content and by the media-presenting devices, for example by a clock frequency of a clock 125 associated with at least one of the media-presenting devices. The rate at which the media content is pushed from the server may typically differ from the rate at which the media content is pulled from the receiver by the media-presenting devices. This may, for example be the case if the respective clocks 115, 125 are not completely synchronized.

Figure 2 illustrates an example basic streaming media setup in a receiving media system 200 such as a mobile terminal. The server may, for example, produce and transmit media content in real-time based on the server clock and use the Real Time Protocol (RTP) to transmit the media content as media frames. The receiving media system 200 receives the media content in the form of the media frames. The media content received from the media server may be buffered in a receive buffer 210 in the player 220 of the receiving media system 200. An advantage of using a buffer 210 is that network induced disturbances and/or noise, that may cause variations in the rate at which media frames are received, may be compensated for to some extent.

At some point, for example when the buffer level reaches a playing threshold, the player 220 starts playing the media content. For example, the player 220 may start playing the media content when the buffer 210 is half-full. Thus, the media content may be pulled from the player 220 (thus draining the receive buffer 210) by devices such as a video decoder 230 and/or an audio decoder 250 for presentation by media-presenting devices, such as corresponding display device 240 and corresponding audio device (loudspeaker) 260. The media content may be pulled at a rate determined by a clock frequency of a clock associated with one of the media-presenting devices 240, 260.

Media frames may, for example be pulled out of the player 220 with the audio device as master, and at a rate defined by an audio device clock 270. In such an example, the player 220 first de-multiplexes the content into audio and video. The audio content is sent to the audio decoder 250 that decodes it and sends it to the audio device 260 for rendering. The video content is sent to the video decoder 230 that decodes it and sends it to the display device 240 for rendering.

Alternatively or additionally, the media content, or part of the media content (video and/or audio), may be pulled from the player 220 for subsequent transmission to yet another media system 130 as explained above in connection to Figure 1. For instance, the video may be presented on the local display 123 while the audio is presented by loudspeaker 132 in a remote wireless headset 130.

If the media consumption rate, i.e. the rate at which the media content is pulled, is faster than the production rate, i.e. the rate at which the buffer is filled, determined by the server clock, then the buffer 210 will under-flow eventually. Vice versa, if the media consumption rate is slower than production rate then the buffer 210 will over-flow eventually. Thus, to prevent the receive buffer from over-flowing or under-flowing, the rate difference needs to be compensated for. This problem is denoted inter-system media synchronization.

Referring back to Figure 1, the sending media system 110 is typically able to multicast the same content to many receiving media systems 120. Thus, it may be cumbersome to adjust the rate of the sending media system 110. In fact, it may even be impossible in some circumstances to adjust the rate of the sending media system. If, for example, the receiving media system 120 presents broadcasted mobile TV, e.g. DVB-H, there are no means of feedback to the sending media system 110 and thus, adjusting the rate of the sending media system would be impossible. Instead, the receiving media system 120 may adjust its rate to that of the sending media system 110. This method is general and is working in all foreseeable cases. Similarly, media system 130 may adjust its rate to that of media system 120.

US 7,006,510 B2 discloses a method for compensating for a clock mismatch or drift between a packet network transmitter and receiver, wherein an average receiver buffer level is estimated over time and the receiver bit rate or clock rate is changed according to the average receiver buffer level change.

US 2006/0184697 A1 discloses a digital media system that uses buffer fullness reports to detect a clock drift between a clock on a host device and a clock on a client device. The system provides a reduction in playback interruptions during playback of streaming media content.

US 2007/0076764 A1 discloses a clock adjustment procedure at a receiver. A trend from a current and a past buffer-used quantity is checked. If the trend exceeds an upper threshold or is less than a lower threshold, the clock is adjusted based on the trend.

US 7,231,453 B2 discloses temporal drift correction by measuring a size of a receiving data buffer and comparing that to a predetermined nominal data buffer size, determine a temporal drift and correcting the temporal drift by inserting or removing a number of samples.

EP 0 987 894 A2 discloses a dejittering and clock recovery technique for real-time audio/visual network applications.

A problem with media consumption rate control algorithms is that each control action may be noticeable to the user. The ear is sensitive to changes in the media processing.

A further problem with media consumption rate control algorithms is that network disturbances and noise may affect the algorithm such that disturbances and noise may trigger control actions when such are in fact not necessary.

Therefore, there is a need for methods and arrangements for controlling a media consumption rate of a receiver using as few control actions as possible. Further, there is a need for methods and arrangements for controlling a media consumption rate of a receiver, which are robust to disturbances and noise.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved methods and arrangements for controlling a media consumption rate of a receiver.

According to a first aspect of the invention, this is achieved by a method for controlling a media consumption rate of a receiver. The method comprises collecting a plurality of trend samples indicative of a trend of a level of a buffer of the receiver wherein each of the trend samples is based on a difference between a first buffer level and a second buffer level, wherein the first buffer level is the level of the buffer at a first moment in time and the second buffer level is the level of the buffer at a second moment in time, determining a trend estimate by forming a mean value of the trend samples, evaluating an accuracy of the trend estimate, and adjusting the media consumption rate based on at least the trend estimate and the evaluated accuracy.

In some embodiments, the trend samples may be formed as the difference between the first buffer level and the second buffer level divided by a difference between the first moment in time and the second moment in time.

In some embodiments, the step of determining a trend estimate may comprise filtering the trend samples. In other embodiments, the step of determining a trend estimate may comprise calculating an average of a plurality of trend samples.

In some embodiments, the step of evaluating the accuracy of the trend estimate may comprise determining that the trend estimate is accurate if the trend estimate has not varied more than an evaluation threshold during an evaluation time period. The evaluation threshold may be a predetermined threshold or a dynamically adjustable threshold. The evaluation time period may be a predetermined time period or a dynamically adjustable time period.

In some embodiments, the step of evaluating the accuracy of the trend estimate may comprise determining whether the trend estimate is accurate, and the step of adjusting the media consumption rate may be performed in response to determining that the trend estimate is accurate. The step of adjusting the media consumption rate in response to determining that the trend estimate is accurate may be performed when the level of the buffer passes a buffer level threshold. The buffer level threshold may be one of a plurality of buffer level thresholds. The step of adjusting the media consumption rate in response to determining that the trend estimate is accurate may be performed if an absolute value of the trend estimate exceeds a minimum value. The minimum value may depend on a size of the buffer and/or on a size of a media file to be received at the receiver.

A second aspect of the invention is a computer program product comprising a computer readable medium, having thereon a computer program comprising program instructions, the computer program being loadable into a data-processing unit and adapted to cause the data-processing unit to execute the method according to the first aspect when the computer program is run by the data-processing unit.

A third aspect of the invention is an arrangement for controlling a media consumption rate of a receiver. The arrangement comprises controlling circuitry associated with a buffer of the receiver. The controlling circuitry is adapted to collect a plurality of trend samples indicative of a trend of a level of the buffer wherein each of the trend samples is based on a difference between a first buffer level and a second buffer level, wherein the first buffer level is the level of the buffer at a first moment in time and the second buffer level is the level of the buffer at a second moment in time, determine a trend estimate by forming a mean value of the trend samples, and output a control signal for controlling the media consumption rate. The controlling circuitry is further adapted to evaluate an accuracy of the trend estimate, and generate the control signal based on at least the trend estimate and the evaluated accuracy.

In some embodiments, the controlling circuitry may comprise a statistical processor adapted to collect the plurality of trend samples, determine the trend estimate, and evaluate the accuracy of the trend estimate, a control trigger adapted to enable a trigger signal based at least on the level of the buffer and the evaluated accuracy of the trend estimate, and output circuitry adapted to generate the control signal based on at least the trend estimate and the trigger signal.

In some embodiments, the third aspect of the invention may additionally have features identical with or corresponding to any of the various features as explained above for the first aspect of the invention.

In some embodiments, the receiver may be a receiving media system.

A fourth aspect of the invention is an electronic apparatus comprising a receive buffer adapted to receive media content, and the arrangement according to the third aspect of the invention.

In some embodiments, the electronic apparatus may further comprise a clock, a video decoder, a display device, an audio decoder, an audio device, and a content scaler.

In some embodiments, the content scaler may be adapted to, based on the control signal, perform at least one of: expanding the media content, compressing the media content, and adjusting a clock cycle period of the clock.

In some embodiments, the electronic apparatus may be a portable or handheld mobile radio communication equipment, a mobile radio terminal, a mobile telephone, a pager, a communicator, an electronic organizer, a smartphone, a computer, an embedded device, a mobile gaming device, a watch or a base station.

One of the advantages of embodiments of the invention is that the number of control actions is minimized.

Another advantage of embodiments of the invention is robustness to disturbances and noise.

### Brief Description of the Drawings

Further objects, features and advantages of the invention will appear from the following detailed description of embodiments of the invention, with reference being made to the accompanying drawings, in which:
Fig. 1 is a block diagram illustrating example connected media systems;
Fig. 2 is a block diagram illustrating an example basic streaming media setup in a receiving media system;
Fig. 3 is a block diagram illustrating an example setup in a receiving media system with flow control;
Fig. 4 is a flow diagram illustrating a method for controlling a media consumption rate of a receiver according to some embodiments of the invention;
Fig. 5 is a flow diagram illustrating a method for controlling a media consumption rate of a receiver according to some embodiments of the invention;
Fig. 6 is a block diagram illustrating an arrangement for controlling a media consumption rate of a receiver according to some embodiments of the invention;
Fig.7 is a graph illustrating the variation of a buffer level when practicing some embodiments of the invention; and
Fig. 8 is a schematic front view of a mobile terminal connected, through a radio link, to a base station site, wherein the mobile terminal and/or the base station may comprise an arrangement according to some embodiments of the invention.

### Detailed Description

In the following description of embodiments of the invention, focus will be on methods and arrangements for controlling a media consumption rate of a receiver where the receiver is a receiving media system, for example a mobile terminal. It is emphasized, however, that this focus is merely to make the description of the embodiments more illustrative and that the invention is not limited to such cases. Contrarily, a receiving media system may be a mobile terminal, a portable computer, a headset for a device such as a mobile phone or an MP3-player, a portable media viewer, etc.

Embodiments of the invention will now be described in which a control algorithm adjusts a media consumption rate of a receiver. In example embodiments, this is achieved by adjusting the media consumption rate of a receiving media system to the production rate of a sending media system.

One way to handle inter-system media synchronization is to not compensate for the rate difference at all, but simply letting the buffer under-flow or over-flow. Thus, when the buffer is under-flowing, the player may stop playing and re-buffer until the buffer is e.g. half-full. When the buffer is over-flowing, the player may stop receiving and continue playing until the buffer is e.g. half-full.

Another way to handle inter-system media synchronization is to control the flow of the media stream. In example ways of controlling the flow of the media stream, the media content is expanded or compressed in time to adapt the media consumption rate to the server rate. The process of expanding or compressing will be referred to as content scaling.

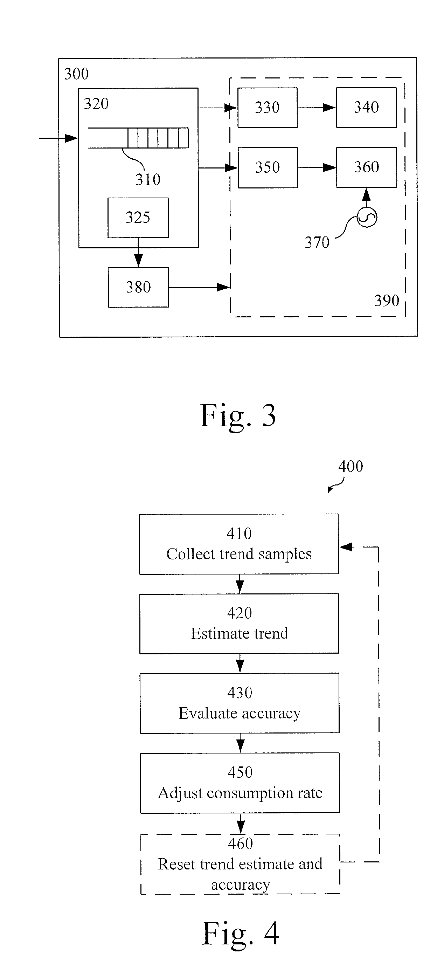

Figure 3 shows an example setup in a receiving media system 300 with flow control. In this example setup, the receive buffer 310, the player 320, the decoders 330, 350, the media-presenting devices 340, 360 and the clock 370, may function similarly as described for blocks 210, 220, 230, 240, 250, 260 and 270 in connection to Figure 2. However, in this example setup, the player also comprises a controller 325 which is adapted to monitor the filling level of the receive buffer 310, and instruct a content scaler 380 to adapt the media consumption rate accordingly. The decoders 330, 350, the media-presenting devices 340, 360 and the clock 370 associated with at least one of the media-presenting devices may be viewed as a media-presenting block 390, and the content scaler is adapted to adjust the media consumption rate by controlling one or more functions of the media-presenting block 390.

According to some control algorithms, on/off controlling may be used to adapt the media consumption rate of the media-presenting block 390. For example, if the buffer level goes below a minimum acceptable level, the media content may be expanded until the buffer level is normal again, e.g. above a first normal value level, and if the buffer level goes above a maximum acceptable level the media content may be compressed until the buffer level is normal again, e.g. below a second normal value level which may be the same as or different from the first normal value level. When expanding, samples may be added to the media content. When compressing, samples may be removed from the media content. One such method is Sample Rate Conversion (SRC) where the sample rate may be changed in small steps effectively adding or removing samples from the audio content by interpolation. When on/off controlling is employed, the scaling factor or scaling degree, i.e. the degree of compression/expansion, is typically quite high. For instance, the scaling factor may be in the range ±[0.5...1 ]%.

According to some control algorithms, proportional control may be used to adapt the media consumption rate of the media-presenting block 390. For example, as soon as the buffer level goes below a target buffer level, the controller may start expanding the media content. The expansion factor may be proportional to the error, i.e. the difference between target buffer level and the current buffer level. Similarly, as soon as the buffer level goes above the target buffer level, the controller may start compressing the media content, and the compression factor may be proportional to the error. When proportional controlling is employed, the scaling factor may typically be in the range [-1, ..., 1]% in steps of 0.1% or less.

According to some content scaling algorithms, the content scaler may adapt the media consumption rate of the media-presenting block 390 by changing the actual media content. When expanding, samples may, for example, be added to the audio content after the audio decoder 350 if the clock that determines the consumption rate is associated with the audio-presenting device. When compressing, samples may be removed from the audio content after the audio decoder 350. One such method is Sample Rate Conversion (SRC) where the sample rate may be changed in small steps effectively adding or removing samples from the audio content by interpolation. Assume, for example, a sample rate of 8 kHz (meaning 8000 audio samples per second). If a sample rate conversion of +1% is applied then the audio content is expanded to 8080 samples per second after the audio decoder, and a consumption rate decrease results.

According to some content scaling algorithms, the content scaler may adapt the media consumption rate of the media-presenting block 390 by adjusting the audio device clock 370 or another clock that determines the media consumption rate. Such solutions may require hardware support to enable the clock frequency to be increased or decreased in small steps. The clock frequency may be decreased in order to expand the media content, and the clock frequency may be increased in order to compress the media content. A drawback with this approach is that the receiving media system can only be connected to one sending media system at a time. If more than one media content stream was received, the streams would compete for the actuator, namely the clock. This drawback is present regardless the control algorithm used to control the clock.

The un-controlled approach, i.e. to not compensate for the rate difference at all but simply letting the buffer under-flow or over-flow, has the obvious disadvantage that the buffer will eventually (except in the rare cases when the sending media system and the receiving media system have clocks with exactly the same frequency) under-flow or over-flow even under ideal network conditions (without any disturbances). When this happens, media playback will be interrupted during a significant time in the under-flow case and content will be lost in the over-flow case.

Flow control is a far better approach since it strives for keeping the current buffer level at the target buffer level at all times. According to such approaches, the media consumption rate of the receiving media system may be adjusted to the production rate of the server as explained above.

A problem with on/off control algorithms is that the transitions between off and on states and vice versa are noticeable to the user. The ear is sensitive to changes in the media processing and such changes will be distinct with on/off control. The on/off control algorithm is likely to introduce limit cycles causing periodical transitions between off and on states. Such cycles have been observed in tests. A further problem with this phenomenon is that it may introduce a large amount of control actions. Each control action is noticeable to the user as explained above.

With proportional control, a lot of control actions may be introduced too, which is unfavorable since the control actions may be noticeable to the user. Generally, proportional control may be more sensitive to noise than on/off control. This may lead to more control actions than on/off control. The changes in the scaling may generally be done in smaller steps than what is done in on/off control.

A problem with both on/off and proportional controlling is that network disturbances and noise affect the controller such that the disturbances and the noise propagate to the scaling level. This has the effect that disturbances and noise may trigger control actions when such are in fact not necessary.

Network disturbances may for example be caused by the network suffering from temporary congestion. When the network suffers from temporary congestion, a lower number than normally of media frames (or even no media frames) are transmitted per time unit during a (usually short) time period. This time period may then be followed by a period where more media frames than normally are transmitted per time unit. Another situation causing disturbance in the media frame reception may be if a mobile terminal comprising the receiving media system temporarily moves into an area without radio coverage, such as a tunnel. Both on/off and proportional control will react on such disturbances and try to compensate for them. At the same time, the control algorithms will cause propagation of the disturbances into the scaling level as mentioned above.

As described above, both proportional control and on/off control give bad performance in terms of the number of control actions carried out and in terms of robustness to disturbances and noise. Variations in the buffer level may be due to random disturbances. In addition, a constant trend may be present for the buffer level. This trend may be caused by differences in the sender and receiver clocks as explained above.

One object of embodiments of the invention is to keep the receive buffer from over- or under-flowing.

The buffer may very well be allowed to absorb noise with an expected mean value of zero. Such characteristics may be found for common disturbances of a media system. Therefore, the buffer level is not necessarily kept close to constant by embodiments of the invention. However, an object of embodiments of the invention might be to keep the average buffer level close to constant.

One object of embodiments of the invention is to find and compensate for a trend in the buffer level.

Another object of embodiments of the invention is to attain this with as few control actions as possible.

An object of embodiments of the invention is to find the best scaling level and then apply it, such that as few scaling switches (control actions) as possible are needed. In some embodiments, the control algorithm adjusts the media consumption rate of a receiving media system to the production rate of a sending media system in one strike in order to minimize the number of audible control actions.

A further object of embodiments of the invention is to introduce robustness against disturbances and noise in the control algorithm, so that disturbances and noise that is not caused by differences in the sender and receiver clocks do not affect the scaling level. In those embodiments, the unknown trend in the noisy buffer level should be identified and attenuated. According to some embodiments, this should be done by as few control actions as possible.

To enable the use of as few control actions as possible, embodiments of the invention first gather sufficient information such that a control action based on the gathered information is likely to solve the main part of the (or the entire) control problem in one strike, and then performs the control action.

In some embodiments of the invention, samples of the buffer level trend are studied. The buffer level trend samples may, for example, be calculated as a difference between a buffer level at a first, e.g. current, point in time and a buffer level at a second, e.g. previous, point in time. According to another example, the buffer level trend samples may be calculated as a difference between a buffer level at a first point in time and a buffer level at a second point in time, divided by the difference between the first point in time and the second point in time. If noise is present, the actual trend may be hidden by the noise when observing the trend samples alone.

In example embodiments, a mean value of the buffer level trend samples is observed for an initial stabilization period. The mean value represents an estimation of the buffer level trend. The initial stabilization period may depend on the application. In the case of media content buffering, the initial stabilization period may, for example, be in the range 1-120 seconds, but periods outside this example range may also be considered. The purpose of the initial stabilization period of the example embodiments is to collect a sufficient amount of trend samples to be able to find a fairly accurate mean value.

The mean value may be an average of the buffer level trend sample values over a predetermined or dynamically adjustable averaging time period. The mean value may also be a filtered buffer level trend sample value. The filter may have a predetermined or dynamically adjustable time constant. Generally speaking, the accuracy of the mean value (and hence of the estimation of the buffer level trend) may increase with the time elapsed during observation of the trend, that is with the number of trend samples used to estimate the trend. This is a consequence of the "law of great numbers", which is well known in the art.

A new mean value may be repeatedly formed as required. For example, a new mean value may be formed at every point in time after the stabilization period ends. In some embodiments, a new mean value is formed at periodically recurring points in time. In some embodiments of the invention, a new mean value is formed at the points in time when it may be adequate to perform a control action. Such points in time will be described in more detail below. The new mean value may be formed based on one or more previous mean values and a current trend sample value, or based directly on previous and current trend sample values.

The accuracy of the mean value, and hence of the trend estimate, is evaluated according to some embodiments of the invention. In some embodiments, the accuracy of the trend estimate is evaluated at every point in time after the stabilization period ends. In some embodiments, the accuracy of the trend estimate is evaluated at periodically recurring points in time. In some embodiments of the invention, the accuracy of the trend estimate is evaluated at the points in time when it may be adequate to perform a control action.

In some embodiments, the accuracy of the trend estimate is evaluated by looking at the history of the trend estimate over a time period, which will be referred to as the evaluation time period. This evaluation time period may depend on the application and it may be predetermined or dynamically adjustable. For the case of media content buffering, the evaluation time period may be in the interval 1-30 seconds, for example, 10 seconds, but also evaluation time periods outside this example interval may be considered.

According to embodiments of the invention, the trend estimate is accepted, i.e. determined to be accurate, if the variation of it has been less than a threshold value, which will be referred to as the evaluation threshold, during the evaluation time period. The variation may, for example, be measured as a statistical variance, as the absolute difference between the maximal and minimal value during the evaluation time period, or as the absolute difference between the maximal and minimal value divided by the mean value. The value of the evaluation threshold may be predetermined or dynamically adjustable and it may depend on the application. As one example, the evaluation threshold may be set at 10% of a value chosen between the maximal and minimal value when the variation is measured as the absolute difference between the maximal and minimal value. The value chosen between the maximal and minimal value may, for example, be the maximal value, the minimal value or the current value.

According to embodiments of the invention, the trend estimate and the result of the evaluation of the accuracy of the trend estimate are used to perform a control action to adjust the media consumption rate.

According to embodiments of the invention, a control action (e.g. a correction of a clock frequency or an expansion or compression of the media streams) may only be performed at certain moments in time, or when the buffer level passes a buffer level threshold. The buffer level threshold may be one of a plurality of buffer level thresholds. In addition, a control action may only be performed if the current trend estimate is determined to be accurate according to embodiments of the invention.

During normal drift with quite small disturbances and a clear trend in the buffer level difference, the evaluation of the accuracy of the trend estimate will result in an accepted trend estimate. Great disturbances will, however, result in the evaluation not accepting the trend estimate and thus not allowing any control actions until the trend estimate is stabilized.

According to some embodiments of the invention, a control action may only be performed when the buffer level passes a buffer level threshold, if the current trend estimate is determined to be accurate, and if the absolute value of the current trend estimate exceeds a minimum value. Thus, a control action is not allowed if the trend is very small.

Further considerations that may be taken into account when determining if it may be adequate to perform a control action may be the size of the buffer and the size of the media content. It can easily be estimated how long time it will take for the buffer to over- or under-flow based on the buffer size and the trend estimate value. If this point in time is farther away than some predetermined or dynamically adjustable time horizon, then it may be determined to not perform any control action. As a further example, if the size of the media content is known, as may be the case, for example, when downloading a television clip, a film or a tune, then it may be determined to not perform any control action if the estimated point in time when the buffer will over- or under-flow is later than an estimated end time of the media content.

An advantage of embodiments of the invention is that disturbances will have greater influence when the trend is small than when the trend is large. This means that the controller will be somewhat faster in accepting trend estimates corresponding to a large trend than those corresponding to a small trend. Hence, the controller will not unnecessarily delay a control action compensating for a large trend. Simultaneously, it will not perform control actions to compensate for a small trend if the trend estimate is uncertain.

An advantage of embodiments of the invention where a control action is only allowed if the trend estimate has not varied too much during a time period is that robustness is introduced towards disturbances and noise.

According to embodiments of the invention, a control action is aimed at attenuate a noise-hidden trend in a receive buffer by adjusting a media consumption rate of the receiver. This may be accomplished in numerous ways.

For example, an arrangement, such as a controller, may order expansion or compression of the media content. The expansion or compression may be executed by a content scaler. According to some embodiments, the actual media content may be changed in response to the control action. As explained above, such an approach may, for example, add samples to the audio and/or video content after the decoders to expand the media content, and remove samples from the audio and/or video content after the decoders to compress the media content. In some embodiments, duplication of samples may be used to expand the media content. In other embodiments, expansion is realized through interpolation between samples.

According to some embodiments, an arrangement, such as a controller, may order an adjustment of a clock associated with the media consumption rate to adapt the media consumption rate. The clock adjustment may be executed by a content scaler. The clock frequency may be decreased in order to expand the media content, and the clock frequency may be increased in order to compress the media content.

Figure 4 illustrates an example method 400 for controlling a media consumption rate of a receiver in accordance with some embodiments of the invention. First a plurality of trend samples is collected in step 410. The trend samples may relate to a trend of the buffer level. The trend samples may be obtained by studying the difference between the buffer level at a first point in time, such as a current buffer level, and the buffer level at a second point in time, such as a previous buffer level. This value may possibly be normalized by the difference between the first point in time and the second point in time.

Then, a mean value of the trend samples is formed and an estimate of the trend is determined based on the mean value in step 420. The mean value may be formed as an average value of the trend samples over some time period. The mean value may alternatively be formed by filtering the trend samples.

In step 430, the accuracy of the trend estimate determined in step 420 is evaluated. For example, the trend estimate may be considered accurate if it has varied less than a certain amount as explained above.

Finally, in step 450, the media consumption rate is adjusted based on the estimated trend and the accuracy of the trend estimate. The accuracy of the trend estimate may determine whether to perform a control action or not, and the estimated trend may determine the amount of adjustment needed. The adjustment may, for example, comprise expanding or compressing one or more information streams, such as media content streams, or adjustment of a clock frequency.

In optional step 460, the trend estimate is reset along with any measured values connected to the accuracy determination and the method may return to step 410 and continue monitoring the trend samples.

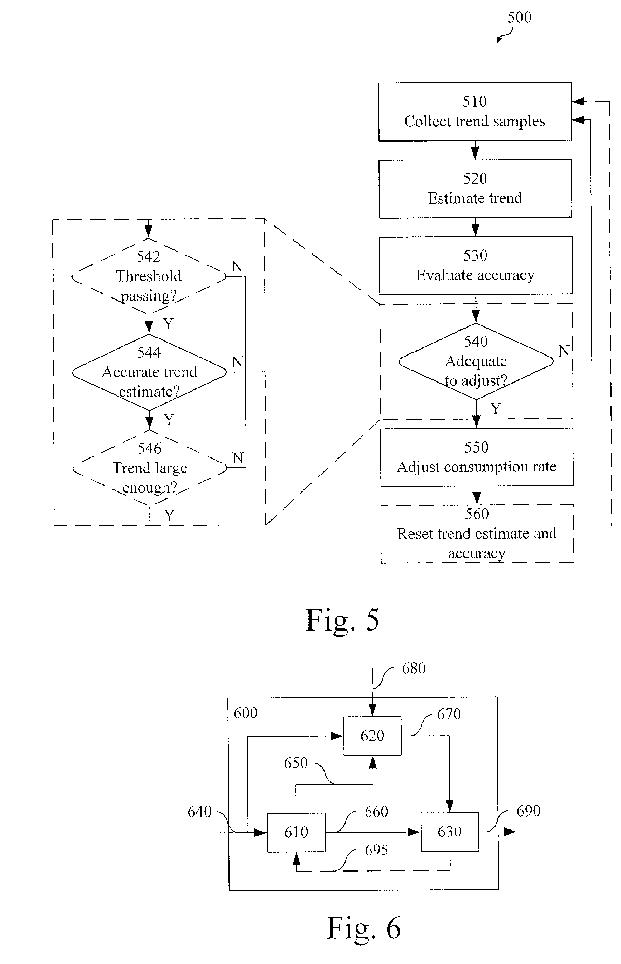

Figure 5 illustrates an example method 500 for controlling a media consumption rate of a receiver in accordance with some embodiments of the invention. Steps 510, 520 and 530 may be executed in a similar way as steps 410, 420 and 430 respectively of Figure 4. Then in step 540, it is determined whether it may be adequate to make an adjustment of the media consumption rate or not. If it is not adequate (NO path out of step 540) the process returns to step 510 and a new trend sample value (or a new plurality of trend sample values) is collected based on the buffer level. If, however, it is adequate to make an adjustment of the media consumption rate (YES path out of step 540) the process proceeds to step 550, where the media consumption rate is adjusted. The estimated trend may determine the amount of adjustment needed. The adjustment may, for example, comprise expanding or compressing one or more information streams, such as media content streams, or adjustment of a clock frequency.

After adjusting the media consumption rate in step 550, the process may return to step 510 to continue monitoring the buffer level trend. Optional step 560, resets the trend estimate along with any measured values connected to the accuracy before the process returns to step 510.

The determination of whether it may be adequate to make an adjustment of the media consumption rate or not in step 540 may be performed in various ways. For example, embodiments of the invention may only consider media consumption rate adjustment at certain moments in time, such as at moments in time recurring at some regular time intervals. Some embodiments of the invention may consider media consumption rate adjustment when the buffer level passes a buffer level threshold, which may be one of a plurality of buffer level thresholds. This is illustrated by optional sub-step 542. If a buffer level threshold is not passed (NO path out of sub-step 542) the process returns to step 510. If a buffer level threshold is passed (YES path out of sub-step 542) the process continues to sub-step 544, where it is checked if the trend estimate was accurate according to the evaluation in step 530. If the trend estimate was not considered accurate (NO path out of sub-step 544) the process returns to step 510. If the trend estimate was considered accurate (YES path out of sub-step 544) the process may continue to optional sub-step 546, where it is determined if the absolute value of the trend estimate is large enough, e.g. exceeds a threshold level. If the absolute value was not large enough (NO path out of sub-step 546) the process returns to step 510. If the absolute value was large enough (YES path out of sub-step 546) the process continues to step 550, where the media consumption rate is adjusted as explained above.

Figure 6 illustrates an example arrangement 600 for controlling a media consumption rate of a receiver according to some embodiments of the invention. The arrangement 600 may be a controller or part of a controller such as the controller 325 in Figure 3. The arrangement 600 may be adapted to execute method steps, for example, in accordance with the example methods described in connection to Figures 4 and 5. The arrangement 600 may be implemented in hardware or in software or a combination of hardware and software.

The arrangement 600 comprises a statistical processor 610, a control trigger 620 and output circuitry 630.

The statistical processor 610 may be adapted to collect samples of a trend of the buffer level, for example, based on a difference between a first buffer level and a second buffer level as explained earlier. For this purpose, the statistical processor 610 receives the buffer level 640 as an input. The statistical processor 610 may also be adapted to form a mean value of the trend samples to determine a trend estimate. The mean value may, for example, be formed by averaging or by filtering. Furthermore, the statistical processor 610 may be adapted to evaluate the accuracy of the trend estimate, for example, in accordance with methods that have been described above. The statistical processor may produce outputs in the form of a signal 650 indicating the accuracy of the trend estimate and the trend estimate 660.

The control trigger 620 may receive the buffer level 640 and the signal 650 indicating the accuracy of the trend estimate as inputs. The control trigger 620 may be adapted to enable a trigger signal 670 based on the buffer level 640 and the signal 650 indicating the accuracy of the trend estimate. The trigger signal 670 may be an update signal that indicates whether it is adequate to adjust the media consumption rate. The conditions for the generation of the trigger signal may be similar to what was described in connection to step 540 and sub-steps 542, 544 and 546 of Figure 5. The condition in method step 546 may be tested in the control trigger, in which case the control trigger is also supplied with the trend estimate (connection not shown in Figure 6). Alternatively, the condition in method step 546 may be tested in the statistical processor 610 and supplied to the control trigger 620, either as part of the signal 650 or through a separate connection (not shown). The control trigger 620 may also receive other input signals 680 if required. The other input signals 680 may, for example, comprise buffer level threshold values.

The output circuitry 630 may be an output memory, such as, for example, an add and accumulate device. The output circuitry 630 may receive the trend estimate 660 and the trigger signal 670 as inputs. The output circuitry 630 may be adapted to output a control signal 690 based on the trend estimate 660 and the trigger signal 670. For example, when the trigger signal 670 is 0, the output circuitry 630 may output the same control signal value as was done at a previous point in time, and if the trigger signal 670 is 1 ("Update"), the output circuitry 630 may output the trend estimate 660, or a value related to the trend estimate 660 (such as the control signal value at a previous point in time plus the trend estimate), as the control signal value.

In example operations, the initial value of the control signal 690 is 0. The output circuitry 630 may act on the trigger signal 670 such that if the trigger signal 670 indicates an update, the output circuitry 630 takes the current trend estimate 660 and adds it to its internal value, thus updating the value of the control signal 690. When updated, the output circuitry 630 may toggle a reset signal 695 input to the statistical processor 610. When reset, the statistical processor 610 starts estimating a new trend and accuracy. According to such operations, a new trend is calculated (after an update of the control signal value) based on the new conditions. If a second control action is needed the second trend estimate may be added to the first trend estimate in output circuitry 630, thus updating the value of the control signal.

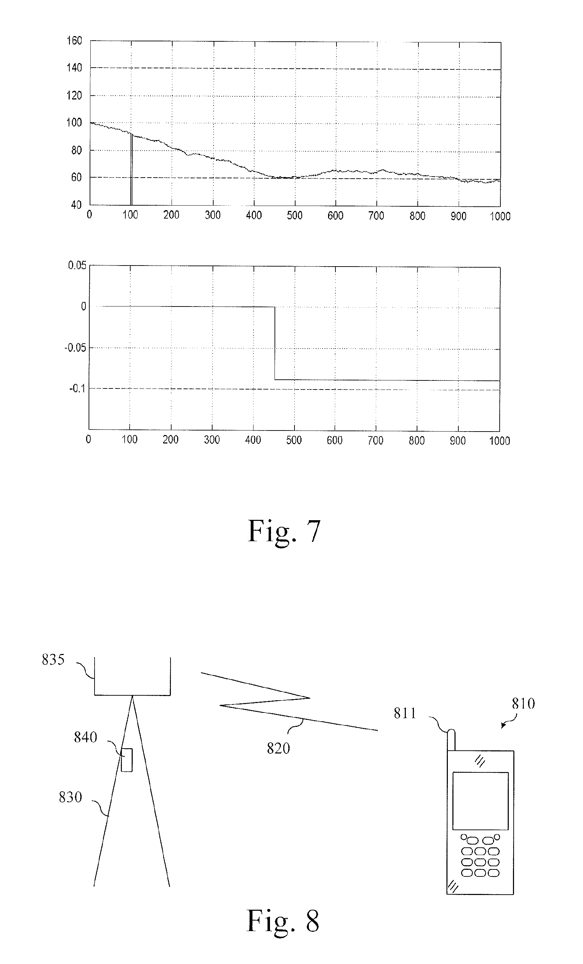

Figure 7 illustrates the results of simulations carried out based on a method according to embodiments of the invention. In these simulations, the initial stabilization period was 60 seconds, and the time period used to determine the accuracy of the trend estimate was 60 seconds. The trend was set to -0.1 units/second. Two buffer level thresholds were used and set to 140 and 60 units. The mean value of the trend (representing the trend estimate) was formed as an average of the trend samples, and the trend estimate was accepted as being accurate if the absolute difference between the maximal and minimal value was less than 10% of the current value during the time period of 60 seconds.

The upper plot of Figure 7 illustrates the buffer filling in number of units as a function of time in seconds. The lower plot of Figure 7 illustrates the scaling signal in units/second as a function of time in seconds.

In the simulations, close to white noise was added to the media content before reception at the receiving media system. After approximately 100 seconds a major disturbance was introduced which may be seen in the upper plot where the buffer level temporarily goes down drastically at that point. This major disturbance did not trigger a control action as may be seen in the lower plot. Thus, the simulation demonstrates the robustness to disturbances in embodiments of the invention.

After approximately 450 seconds the lower buffer level threshold was reached, as seen in the upper plot, while the current mean value of the trend (not shown in the plot) was deemed to be accurate. This event triggered a change in the scaling signal output from the controller as demonstrated in the lower plot. This control action adjusted the media consumption rate, which in turn stabilized the buffer as can be seen in the upper plot in that the trend is now close to 0. Thus, the simulation demonstrates that embodiments of the invention are able to stabilize the average buffer level (i.e. remove a trend), and that few (if more than one) control actions are needed.

At approximately 900 seconds, the lower buffer level threshold was reached again. At this moment, however, no control action was triggered because the trend estimate was not considered accurate.

The described embodiments of the invention and their equivalents may be performed by general-purpose circuits associated with or integral to a receiver having a receive buffer (for example, a receiving media system), such as digital signal processors (DSP), central processing units (CPU), co-processor units, or by specialized circuits such as for example application-specific integrated circuits (ASIC). All such forms are contemplated to be within the scope of the invention.

The invention may be embodied within an electronic apparatus comprising a receiver having circuitry or performing methods according to any of the embodiments of the invention. The electronic apparatus may, for example, be a portable or handheld mobile radio communication equipment, a mobile radio terminal, a mobile telephone, a pager, a communicator, an electronic organizer, a smartphone, a computer, an embedded device, a mobile gaming device, or a (wrist) watch. The electronic apparatus may alternatively be a base station in a communication system.

Figure 8 illustrates an example mobile terminal 810 connected, through a radio link 820, to a base station site 830. The base station site 830 comprises one or more antennas 835 and at least one base station 840. The base station 840 and/or the mobile terminal 810 may comprise one or more arrangements adapted to control a media consumption rate according to embodiments of the invention.

The mobile terminal 810 is illustrated as a mobile telephone in a schematic front view. This example mobile terminal 810 comprises an antenna 811 mounted on the housing of the apparatus. Alternatively, the mobile terminal 810 may have an internal antenna mounted within the housing of the apparatus. The mobile terminal 810 may even comprise multiple antennas. The mobile terminal 810 may further comprise a display, a keypad, a loudspeaker, and a microphone, which together provides a man-machine interface for operating the mobile terminal 810.

The example mobile terminal 810 is adapted to connect to a mobile telecommunication network via the wireless link 820 to the radio base station 840. Hence, a user of the mobile terminal 810 may use conventional circuit-switched telecommunication services such as voice calls, data calls, video calls, and fax transmissions, and/or packet-based services such as electronic messaging, VoIP, Internet browsing, electronic commerce, etc. To this end, the mobile terminal 810 and the base station 840 may be compliant with at least one mobile telecommunication standard, for instance UMTS LTE. Alternatively or additionally, the mobile terminal 810 may be adapted to connect to one or more digital broadcast systems and to receive signals, such as media content, on accordance with at least one standard for digital broadcast, such as DVB-H or DAB.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in the base station 840 and/or mobile terminal 810. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in Figures 4 and/or 5.

One advantage of embodiments of the invention is that the noise-hidden trend is attenuated.

Another advantage of embodiments of the invention is that as few control actions as possible may be used in the control algorithm.

A further advantage of embodiments of the invention is that it is robust against disturbances and noise.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the invention is construed to be limited by the appended claims and all reasonable equivalents thereof.

## Claims

1. A method for controlling a media consumption rate of a receiver, comprising:
collecting (410, 510) a plurality of trend samples indicative of a trend of a level of a buffer of the receiver, wherein each of the trend samples is based on a difference between a first buffer level and a second buffer level, and wherein the first buffer level is the level of the buffer at a first moment in time and the second buffer level is the level of the buffer at a second moment in time;
determining (420, 520) a trend estimate by forming a mean value of the trend samples;
evaluating (430, 530) an accuracy of the trend estimate; and
adjusting (450, 550) the media consumption rate based on at least the trend estimate and the evaluated accuracy.

2. The method of claim 1, wherein the trend samples are formed as the difference between the first buffer level and the second buffer level divided by a difference between the first moment in time and the second moment in time.

3. The method of any of claims 1 to 2, wherein the step of determining a trend estimate comprises at least one of:
filtering the trend samples; and
calculating an average of a plurality of trend samples.

4. The method of any of claims 1 to 3, wherein the step of evaluating the accuracy of the trend estimate comprises determining that the trend estimate is accurate if the trend estimate has not varied more than an evaluation threshold during an evaluation time period.

5. The method of claim 4, wherein the evaluation threshold is one of:
a predetermined threshold; and
a dynamically adjustable threshold.

6. The method of any of claims 4 to 5, wherein the evaluation time period is one of:
a predetermined time period; and
a dynamically adjustable time period.

7. The method of any of claims 1 to 6, wherein the step of evaluating the accuracy of the trend estimate comprises determining (544) whether the trend estimate is accurate, and wherein the step of adjusting the media consumption rate is performed in response to determining that the trend estimate is accurate.

8. The method of claim 7, wherein the step of adjusting the media consumption rate in response to determining that the trend estimate is accurate is performed when the level of the buffer passes a buffer level threshold (542).

9. The method of claim 8, wherein the buffer level threshold is one of a plurality of buffer level thresholds.

10. The method of any of claims 7 to 9, wherein the step of adjusting the media consumption rate in response to determining that the trend estimate is accurate is performed if an absolute value of the trend estimate exceeds a minimum value (546).

11. The method of claim 10, wherein the minimum value depends on a size of the buffer.

12. The method of any of claims 10 to 11, wherein the minimum value depends on a size of a media file to be received at the receiver.

13. A computer program product comprising a computer readable medium, having thereon a computer program comprising program instructions, the computer program being loadable into a data-processing unit and adapted to cause the data-processing unit to execute the method according to any of claims 1 to 12 when the computer program is run by the data-processing unit.

14. An arrangement (325, 600) for controlling a media consumption rate of a receiver (300), comprising:
controlling circuitry (610, 620, 630) associated with a buffer (310) of the receiver and adapted to:
collect a plurality of trend samples indicative of a trend of a level (640) of the buffer, wherein each of the trend samples is based on a difference between a first buffer level and a second buffer level, and wherein the first buffer level is the level of the buffer at a first moment in time and the second buffer level is the level of the buffer at a second moment in time;
determine a trend estimate (660) by forming a mean value of the trend samples; and
output a control signal (690) for controlling the media consumption rate;
**characterized by:**
the controlling circuitry being further adapted to:
evaluate an accuracy (650) of the trend estimate; and
generate the control signal based on at least the trend estimate and the evaluated accuracy.

15. The arrangement of claim 14, wherein the controlling circuitry is adapted to form the trend samples as the difference between the first buffer level and the second buffer level divided by a difference between the first moment in time and the second moment in time.

16. The arrangement of any of claims 14 to 15, wherein the controlling circuitry comprises:
a statistical processor (610) adapted to collect the plurality of trend samples, determine the trend estimate, and evaluate the accuracy of the trend estimate;
a control trigger (620) adapted to enable a trigger signal (670) based at least on the level of the buffer and the evaluated accuracy of the trend estimate; and
output circuitry (630) adapted to generate the control signal based on at least the trend estimate and the trigger signal.

17. The arrangement of claim 16, wherein the statistical processor comprises a filter adapted to form the mean value of the trend samples.

18. The arrangement of any of claims 16 to 17, wherein the statistical processor is adapted to determine that the trend estimate is accurate if the trend estimate has not varied more than an evaluation threshold amount during an evaluation time period.

19. The arrangement of any of claims 16 to 18, wherein the statistical processor is further adapted to determine whether the trend estimate is accurate, and wherein the control trigger is adapted to enable the trigger signal in response to the trend estimate being accurate.

20. The arrangement of claim 19, wherein the control trigger is further adapted to enable the trigger signal in response to the level of the buffer passing a buffer level threshold.

21. The arrangement of claim 20, wherein the buffer level threshold is one of a plurality of buffer level thresholds.

22. The arrangement of any of claims 19 to 21, wherein the control trigger is further adapted to enable the trigger signal if an absolute value of the trend estimate exceeds a minimum value.

23. The arrangement of any of claims 16 to 22, wherein the receiver is a receiving media system.

24. An electronic apparatus (300) comprising:
a receive buffer (310) adapted to receive media content; and
the arrangement (325, 600) according to any of claims 14 to 23.

25. The electronic apparatus of claim 24, further comprising:
a clock (370);
a video decoder (330);
a display device (340);
an audio decoder (350);
an audio device (360); and
a content scaler (380).

26. The electronic apparatus of claim 25, wherein the content scaler is adapted to, based on the control signal, perform at least one of:
expanding the media content;
compressing the media content; and
adjusting a clock cycle period of the clock.

27. The electronic apparatus of any of claims 24 to 26, wherein the electronic apparatus is a portable or handheld mobile radio communication equipment, a mobile radio terminal, a mobile telephone (810), a pager, a communicator, an electronic organizer, a smartphone, a computer, an embedded device, a mobile gaming device, a watch or a base station (840).
